# EUROPEAN PATENT APPLICATION

(11) **EP 3 012 809 A1**
(43) Date of publication of application: **27.04.2016**
(21) Application number: 15169080.7
(22) Date of filing: 25.05.2015
(51) Int. Cl.: G07B 15/04

(54) **SYSTEM AND METHOD FOR MONITORING THE USE OF PUBLIC TRANSPORT VEHICLES AND PAYMENT FOR RIDE**

(30) Priority: 20.10.2014 EP 14189604
(71) Applicant: T grupp AS, 10144 Tallinn (EE)
(72) Inventor: Tuul, Marek, 10144 Tallinn (EE); Osula, Andres, 10144 Tallinn (EE)
(74) Representative: Käosaar, Jüri

(57) **Abstract**

The system and method for monitoring the use of a public transport vehicle and payment for ride, which comprises the processor unit of public transport vehicle installed in the public transport vehicle, which is connected with the ride administration server located outside the public transport vehicle via the first radio communication connection. Set of radio transmitters inside a public transport vehicle and a set of radio transmitters outside a public transport vehicle and mobile communication devices of the users of the vehicle are connected with the processor unit. Internal and external radio transmitters are configured for one-way transmission of a beacon signal, which comprises identifiers for the identification of the specific public transport vehicle, line, the previous or the next stop, and location of the radio transmitter (inside/outside). The mobile communication device is configured to assess the strength of beacon signals transmitted from internal and external radio transmitters, and thereby, to ascertain location of the mobile communication device in relation to the specific public transport vehicle, i.e. if the mobile communication device is located inside or outside the vehicle. The decision about being in the public transport vehicle is made after the public transport vehicle has started moving.

## Description

### Technical field of the invention

The invention belongs into the systems and methods for monitoring the use of public transport vehicles, e.g. buses, and payment for ride, based on the use of mobile communication equipment by the passengers.

### Background of the invention

Various solutions are known, where electronic equipment is used for payment for the use of public transport vehicles. All currently known solutions have considerable shortcomings.

Solutions are known, where the start and/or end of the use of a public transport vehicle is fixed, based on passing by a post or through a gate equipped with suitable sensors. In case of such solution, the user shall purchase a special device or a transport card. It is also typically necessary to bring such device or card as close as possible, a few centimetres or less, to the sensors, in order to enable reading, and to ensure that use of the public transport vehicle has been registered. Such solutions are inconvenient for the user.

The closest known solution from the standpoint of the technical field has been described in the document EP2820634. This document describes a method and radio terminal for the transmission of data about a vehicle in real time, including the route, where the vehicle is moving together with the passenger and for the detection and transmission of data needed for payment in real time. Radio terminal transmits the data to the personalised mobile communication device of the passenger, and the actual route covered by the passenger and other data needed for payment are verified.

According to the method, a radio terminal is installed in a relevant vehicle. The radio terminal is constructed with the purpose of transmitting a radio signal as a dynamic Beacon-Broadcast signal together with real time data about the vehicle/route. The radio signal can be received in the entire vehicle with standard mobile communication equipment without creating two-way data communication or connection.

In the beginning of the trip, electronic detection of the route is activated with transport ticket application installed in the mobile communication device, and the second radio module is activated in the mobile communication device, in order to receive radio signal.

Data concerning the vehicle/route are determined repeatedly in real time with radio terminal or related equipment and data concerning relevant vehicle/route are transmitted through real-time radio signals.

Real-time data concerning the vehicle/route, included in the radio signal, are received, identified, and then stored in the mobile-communication device. The previous steps are repeated until the end of electronic detection of the route in mobile communication device upon exit from the vehicle at the end of the trip.

Data, which are important from the standpoint of payment, are obtained in the course of electronic detection of route, and transmitted to the background system of a passenger transport company.

According to the described solution, the event of starting the ride is determined as the moment of entry into the vehicle or a stop, and the event of ending the ride as exit from the vehicle or a stop, using the following options: pressing a key on a mobile device, bringing to close vicinity of a radio communication interface with short operating radius (WLAN, NFC, Bluetooth, Zigbee, RFID), scanning of an optical marker, detection of a magnetic field or an ultrasonic signal with magnetic field sensor or microphone of a mobile device, or with acceleration character or vibration. Preferably, radio communication signal (WS) is taken into account when assessing genuineness of data, or to determine entry or exit of a passenger into or from the vehicle.

A shortcoming of this solution is the fact that it is not possible to determine automatically, if a person is staying inside or outside the public transport vehicle. In a situation, where a person is, for example, riding in a car beside a public transport vehicle for a sufficiently long distance, in case of automatic registration of ride, such a person can be accidentally registered as staying inside the public transport vehicle. Use of an absolute signal strength threshold is not a solution, because it can depend on the number of people in the public transport vehicle, clothing, location of mobile communication device (pocket, bag etc.), sensitivity of radio communication aerial of the mobile communication device, etc.

This invention offers a solution, which enables registering the start and end of the use of a public transport vehicle precisely and reliably, automatically for the user and the service provider, without a need to take out a mobile communication device and without the need to touch sensors with such a device or bring such a device to a close vicinity of the sensors.

### Summary of the invention

Objectives of the invention are achieved with the system, which comprises:
Processor unit of public transport vehicle installed in the public transport vehicle, which is connected with the ride administration server located outside the public transport vehicle via the first radio communication connection, such as mobile data communication;
Set of radio transmitters inside a public transport vehicle and set of radio transmitters outside the public transport vehicle, which are connected via a wired or wireless data communication connection with the processor unit of public transport vehicle, whereby the radio transmitters operate as radio beacons, which are configured to transmit a one-way beacon signal, which comprises an identifier for identification of the specific public transport vehicle; and
A mobile communication device of at least one user of public transport vehicle or passenger, which is configured to assess strength of the beacon signals transmitted from internal and external radio transmitters, and thereby to detect the location of the mobile communication device in relation to the specific public transport vehicle, i.e. first and foremost, if the mobile communication device is located inside or outside the public transport vehicle.

Preferably, a suitable signal meeting a standard of wireless personal network (see IEEE 802.15) is used for transmitting the beacon signal, such as a signal meeting the Bluetooth low energy standard; see Bluetooth core standard 4.0. The mobile communication device is able to receive the relevant signal and equipped with a relevant software application for the detection of the position of the mobile communication device and other parameters.

Preferably, the system comprises at least three internal and two external radio transmitters. Suitable number of radio transmitters depends on the size of the public transport vehicle, including its number of passenger spaces, either one or more, and shall be sufficient to enable reliable detection of the location of mobile communication devices located in different areas in relation to the public transport vehicle. Internal radio transmitters are radio transmitters installed in passenger space or outside such space, but transmitting a signal targeted mainly to the interior of the passenger space, and external radio transmitters are radio transmitters installed outside the passenger space or in such space, but transmitting a signal targeted mainly to the outside of the passenger space.

Communication between mobile communication device and the processor unit of public transport vehicle, the second radio communication connection, takes place preferably with a signal meeting *Bluetooth low energy* (BLE) standard. Other possible options are a signal meeting *Classic Bluetooth* standard, WiFi or other similar signals.

Preferably, the mobile communication device is connected with the ride administration server via a third communication connection, such as mobile data communication or WiFi.

Objectives of the invention are achieved by the following method (the method for monitoring the use of public transport vehicle and sale of a right for a ride):
Beacon signals are created around and inside the public transport vehicle by internal and external radio transmitters (radio beacons);
Location of mobile communication device in relation to the public transport vehicle, i.e. if the mobile communication device is located inside or outside the public transport vehicle, is determined based on variations in strength of the beacon signals, using software application installed in the mobile communication device; and
Use of the public transport vehicle by the user of the mobile communication device is detected, based on the speed of the public transport vehicle and location of the mobile communication device in relation to the public transport vehicle. Upon detection of the use of the public transport vehicle, a relevant message is transmitted from the processor unit of the public transport vehicle to the ride administration server via radio communication connection.

The processor unit coordinates the operation of internal and external radio transmitters, i.e. instructs the radio transmitters, which content they should broadcast. One of the parameters to be transmitted is movement of the vehicle. If the vehicle is moving, the software application of the mobile communication device knows that now, it is possible to start validation process. Decision about being on the bus and check-in is made by the software application of the mobile communication device and check-in is verified over a secure connection with the processor unit.

After making a decision about check-in, the user account ID stored in the software application of the mobile communication device is transmitted to the processor unit.

In the ride administration server, data related to the same event of use of a public transport vehicle are compared and relevant sum is determined for payment for the ride.

### Short description of figures

Figure describes a system according to an example of an embodiment of the invention.

### Examples of embodiments of the invention

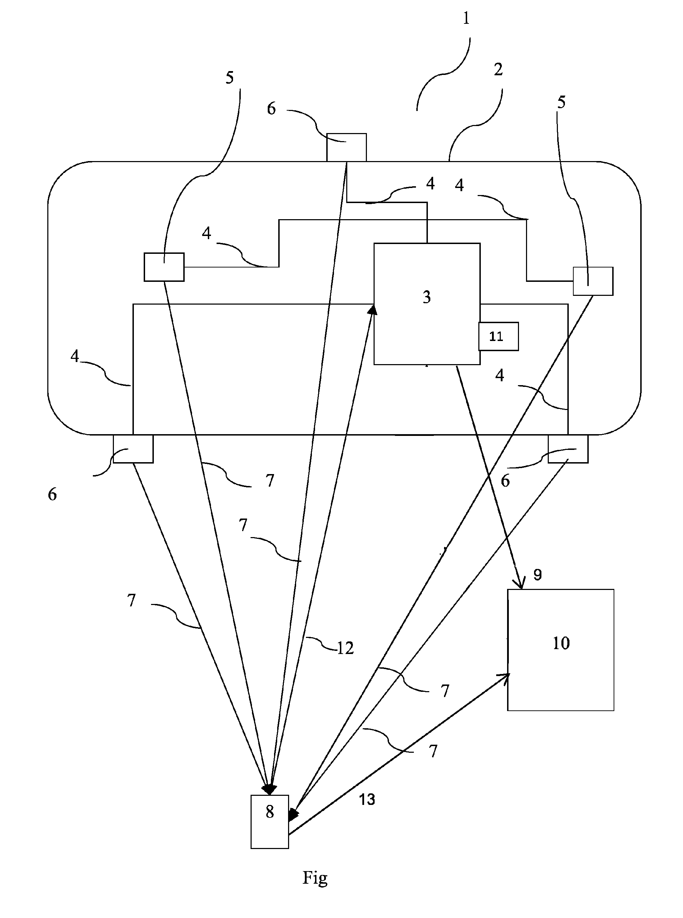

An example of embodiment of system 1 of the invention is depicted on the figure. Public transport vehicle 2 is equipped with the processor unit 3, which is connected via wired or wireless data communication connections 4 with internal 5 and external 6 radio transmitters of the public transport vehicle, which are set to transmit beacon signals 7, i.e. operate as radio beacons. Beacon signals 7 are received by mobile communication devices 8 of the users. The processor unit 3 is connected via the first radio communication connection 9 with the ride administration server 10. Public transport vehicle 2 is equipped with a positioning device 11. Mobile communication device 8 is set, with a relevant software application, to determine the closest radio transmitter 5 or 6 or the closest radio transmitters 5 and/or 6, based on the strength of beacon signals 7 of the radio transmitters 5 and 6, and based on this, to determine location of the mobile communication device 8 in relation to the public transport vehicle 2, i.e. if the mobile communication device is located inside or outside the public transport vehicle. For registration of ride in the processor unit 3, the mobile communication device 8 is connected with the processor unit 3 via second radio communication connection 12.

System 1 of the invention operates as follows: the processor unit 3 transmits beacon signal 7 suitable for reception to the mobile communication device 8 via internal and external radio transmitters (correspondingly 5 and 6), using e.g. a signal meeting Bluetooth low energy (BLE) standard. Software application is activated in the mobile communication device 8, which searches the beacon signals 7 meeting the parameters set in the software application periodically. When suitable beacon signals 7 are found, the software application activated in the mobile communication device 8 determines which radio transmitter(s) has/have the strongest signal(s), i.e. which radio transmitters are the closest to the mobile communication device 8. Based on the closest radio transmitters, the software application of the mobile communication device determines the location of the device in relation to the public transport vehicle. When software application has detected the location of the mobile communication device inside the public transport vehicle, the mobile communication device initiates a communication session with the processor unit for registration of the start of use of the public transport vehicle (check-in) via the second radio communication connection, preferably e.g. BLE connection. Messages transmitted via a radio communication connection may include the following data:
Identifier of the public transport vehicle - unique identifier for unambiguous identification of the public transport vehicle;
Line identifier - unique identifier for unambiguous identification of the line/route on which the public transport vehicle is operating; and
Speed of the public transport vehicle, based on a signal of the positioning device 11, signal of the speedometer of the public transport vehicle, etc.

Preferably, the solution uses the following data communication connections:
One-way data communication connection 7 between the radio transmitters 5 and 6 (BLE beacons) and the mobile communication device 8 (smartphone), from the processor unit 3 of the public transport vehicle to radio transmitter 5, 6 and from there to the mobile communication device 8, used for detection of the events of registering in or entry *(check-in)* and registering out or exit *(check-out)* of the passenger. Preferably, the data created in the course of the above-described communication, are transmitted by the software of the mobile communication device to the ride administration server 10, using third radio communication connection 13, such as mobile data communication.

Two-way secure data communication connection between the processor unit and the mobile communication device via the second radio communication channel, such as BLE, *Classic Bluetooth* or WiFi (from the processor unit of the public transport vehicle to BLE, *Classic Bluetooth* or WiFi transmitter-receiver, and from there to the mobile communication device and other way round), used for secure authentication of the passenger and monitoring the stay in the public transport vehicle. Stay in a public transport vehicle is defined as the time between entry and exit together with the covered distance. Preferably, the data created in the course of the above-described communication, are transmitted by the processor unit 3 of the public transport vehicle to the ride administration server 10, using the first radio connection 9, such as mobile data communication.

Data concerning stay of the passenger in the public transport vehicle are collected from the mobile communication device 8 and the processor unit 3, and transmitted to the ride administration server (see "Transmission of data from the mobile communication device to the ride administration server" and "Transmission of data from the processor unit to the ride administration server"), where data related to the same event of use of a public transport vehicle 2 are compared and the relevant sum is determined for payment for the ride.

Collection of data from two parallel channels is necessary, in order to ensure fair payment and to minimise possible danger of fraud, e.g. in a situation, where the passenger deactivates mobile data communication in the mobile communication device and data about the stay in the public transport vehicle are not transmitted to the ride administration server, and the transport service provider does not know that the service was used.

### Beacon signal

Communication between radio transmitters 5, 6 and the mobile communication devices 8 takes place with beacon signals 7. Beacon signal 7 may include the following data:
Identifier of the radio transmitter - the identifier for unambiguous identification of the location of the radio transmitter in the public transport vehicle;
Identifier of the public transport vehicle - unique identifier for unambiguous identification of the public transport vehicle;
Line identifier - unique identifier for unambiguous identification of the line/route on which the public transport vehicle is operating;
Identifier of the next stop - determines unambiguously the route section, during which the beacon signal was transmitted;
Speed - determines the speed of the public transport vehicle at the moment of transmission of the beacon signal. Preferably, discrete levels may be set for the speed of the vehicle, e.g. 0-3, where 0 is standstill and 3 is fast speed; and
Time stamp - time of transmission of the beacon signal.

The abovementioned identifiers enable separating the known radio transmitters of interest from other radio transmitters and to define a set of radio transmitters related to a single public transport vehicle.

### Identification of public transport vehicles with familiar radio transmitters

Mobile communication device has been set to check with specified frequency, depending on the choices of the user or the number of nearby radio transmitters, e.g. after every 10 seconds to 1 minute, if there are any familiar radio transmitters nearby, where familiar radio transmitter is a radio transmitter, which transmitted a beacon signal comprises identifiers familiar for the software. If any familiar radio transmitters are detected, the set of radio transmitters with the strongest signal corresponding to the same public transport vehicle is searched from among them, i.e. radio transmitters, which transmit beacon signals with the identifier of the same public transport vehicle.

Preferably, strength of the signals of radio transmitters within radio coverage range is measured. In case of BLE, the approximate estimations of signal strength may be used *(received signal strength indication* or RSSI), which are grouped based on the public transport vehicles and summed up, as a result of which, total signal strengths based on the public transport vehicle are obtained. For better highlighting of variations in total signal strengths of different public transport vehicles, various functions may be applied to signal strengths before summing up, e.g. gradation.

### Decision process

When the public transport vehicle with highest total signal strength, i.e. the closest public transport vehicle, has been identified and it is moving (i.e. value of the parameter of beacon signals transmitted by radio transmitters installed on the public transport vehicle indicating the speed is expressing movement), a decision process "if the mobile communication device is located inside or outside the public transport vehicle" is initiated for this public transport vehicle. The decision process is performed preferably in a moving public transport vehicle, in order to avoid errors caused by passengers entering or exiting a standing public transport vehicle or mobile communication devices accidentally located near the public transport vehicle. In parallel with the decision process, it is checked, if the public transport vehicle, for which the decision process was initiated, is still a moving public transport vehicle with highest total signal strength. If yes, the decision process is continued; if no, the decision process is initiated for a new object, i.e. a public transport vehicle, which is moving and where the total signal strength of the installed radio transmitters is the highest. When being inside the public transport vehicle is validated during the decision process (registration of check-in, see "Ascertainment of the event of entry into public transport vehicle (check-in)"), the search of the public transport vehicle with highest total signal strength is stopped on the background and a decision process is continued, which is necessary in order to register exit from the public transport vehicle (registration of check-out, see "Ascertainment of the event of exit from the vehicle (check out)"). Decision process is ended and search of the public transport vehicle with highest total signal strength is restarted, when it is confirmed in the course of the decision process that the mobile communication device is not any more located in the public transport vehicle, i.e. exit from the public transport vehicle has been registered (check-out).

### Confirming of the event of entry into public transport vehicle (check-in)

An event of entry into public transport vehicle is confirmed, based on the strength of the signals of internal and external radio transmitters of the closest public transport vehicle, i.e. the public transport vehicle with the highest total signal strength, preferably based on the average strength, using the following decision criteria:
(a) if the average signal strength of internal radio transmitters is higher than the average signal strength of external radio transmitters; and
(b) if the signal strength of an internal radio transmitter with the strongest signal is higher than the signal strength of an external radio transmitter with the strongest signal.

Fulfilment of the abovementioned criteria is checked with sufficient frequency, e.g. N times per second, and the decision is made after a specified period, e.g. Z seconds, for example as follows:
Mobile communication device is in the public transport vehicle, if at least Y% of the check sets performed during last X seconds have achieved positive result (i.e. the conditions (a) as well as (b) are positive);
The mobile communication device is not in the public transport vehicle - less than Y% of the check sets performed during last X seconds have achieved positive result. Decision cannot be made - during last X seconds, the fulfilment of criteria has not been possible to check, due to the lack of connection with radio transmitters (e.g. if radio communication connection of the mobile communication device has been switched off).

Value ranges of the parameters of the system are the following:
N - 1 to 5;
Y - 75% to 100%;
Z - 2 to 20;
X - 1 to 20.

Preferably, the parameter X depends on the speed of the public transport vehicle. The slower the speed of the public transport vehicle, the longer the checking period needed for making the decision, because in case of lower speed, there is higher probability that the moving trajectory of a person moving near the public transport vehicle coincides with the trajectory of the public transport vehicle, and therefore, a wrong decision could be made.

Entry into the vehicle and start of ride (check-in) is considered occurred, if the decision "Mobile communication device is in the public transport vehicle" has been made.

### Ascertainment of the event of exit from the vehicle (check-out)

Correct event of the end of the ride is considered occurred, when the decision "Mobile communication device is in the public transport vehicle" is followed after Z seconds by the decision "Mobile communication device is not in the public transport vehicle".

Incorrect event of the end of the ride is considered occurred, when the decision "Mobile communication device is in the public transport vehicle" is followed after Z seconds by the decision "Cannot make a decision" (e.g. radio communication connection of the mobile communication device has been switched off) or no decisions follow after Z seconds, e.g. the mobile communication device switched off or was switched off.

### Communication between the processor unit of the vehicle and the mobile communication device

After successful ascertainment of the event of start of the ride *(check-in),* a secure data communication connection is established between the processor unit of the public transport vehicle and the mobile communication device, using the second radio communication connection (preferably BLE connection). In the course of radio communication connection, the processor unit transmits to the mobile communication device the messages verifying availability of connection with the frequency specified in the processor unit. Reply of the mobile communication device to the message of the processor unit comprises also an identifier referring to the user account stored in the software of the mobile communication device (for identification of the client) and the latest decision of the software application of the mobile communication device about the stay in the public transport vehicle. The processor unit stores reply messages received from the mobile communication device e.g. with following data:
Identifier of the client - unique identifier for unambiguous identification of the user account of the passenger having used the public transport vehicle;
Status of stay in the public transport vehicle (yes/no) - the latest decision of the mobile communication device about the stay in the public transport vehicle (used to compare compliance of data originating from different channels);
Time stamp - time of receipt of the reply message;
Geographic coordinates - geographic coordinates of the public transport vehicle at the time of receiving the reply message;
Identifier of the next stop - determines unambiguously the route section, during which the reply message was received; and
Speed - determines the speed of the public transport vehicle upon receiving the reply message.

### Transmission of data from the mobile communication device to the ride administration server

After the occurrence of the event of the end of the ride, both correct as well as incorrect data about the last ride are transmitted to the ride administration server, using the third radio communication connection. Messages transmitted via a radio communication connection may include the following data:
Identifier of the client - unique identifier for unambiguous identification of the user account of the passenger having used the public transport vehicle;
Identifier of the public transport vehicle - unique identifier for unambiguous identification of the public transport vehicle;
Time stamp of the start of the ride (*check-in* event);
Identifier of the next stop at the moment of start of the ride (the previous stop is considered the stop of the start of the ride);
Time stamp of the end of the ride (*check-out* event); and
Identifier of the next stop upon the end of the ride (in case of correct end of the ride, it is the stop of the end of the ride).

### Transmission of data from the processor unit to the ride administration server

Data about the ride of a specific passenger are transmitted to the ride administration server G minutes, where the G-system parameter, the value range of which is 1 to 120 minutes, after the end of data communication between the processor unit of the vehicle and the mobile communication device, i.e. receipt of the last reply message, using the first radio communication connection. Messages transmitted via radio communication connection may include the following information:
Identifier of the client - unique identifier for unambiguous identification of the user account of the passenger having used the public transport vehicle;
Identifier of the public transport vehicle - unique identifier for unambiguous identification of the public transport vehicle;
Time stamp of the start of the ride (*check-in* event);
Identifier of the next stop at the start of the ride, where the previous stop is considered the stop of the start of the ride;
Geographic coordinates at the start of the ride (at the moment of check-in event); Time stamp of the end of the ride (*check-out* event), the moment of receipt of the last reply message;
Status of stay in the public transport vehicle (yes/no) - the latest decision of the mobile communication device about the stay in the public transport vehicle in the last reply message;
Identifier of the next stop at the moment of end of the ride, where in case of correct end of the ride, it is the stop of the end of the ride;
Geographic coordinates at the end of the ride (the moment of receipt of the last reply message); and
Speed of the public transport vehicle at the end of the ride (the moment of receipt of the last reply message).

### Checking and analysing of data in the ride administration server

Various validations of data received from processor units and mobile communication devices are performed in the ride administration server, based on data sets, e.g. the sets of data of identifiers of passed stops, identifier of the public transport vehicle and time stamps are compared to the data stored in the server, to ensure correctness of data and avoid misuse of the system.

After successful completion of the abovementioned validation process, the decision process for detection of basic data for payment for the consumption of public transport service is activated. Some example of possible decision criteria and decisions are provided below:
Correct events at the start of the ride (check-in) and at the end of the ride (check-out) have been transmitted from the mobile communication device. Start and end of the ride have been confirmed, based on the data transmitted from the processor unit of the public transport vehicle, and data of the start of the ride match the data of the first reply message received by the mobile communication device, and data of the end of the ride match the data of the last reply message received by the mobile communication device. In such a case, the time and the stop of beginning of the ride, the time and the stop of end of the ride are determined, based on the data transmitted by the mobile communication device, and payment for the ride takes place in accordance with actual consumption.
Correct events of the start of the ride *(check-in)* and the end of the ride *(check-out)* have been transmitted from the mobile communication device, but no data have been transmitted from the processor unit of the public transport vehicle. In such a case, the time and stop of start of the ride and the time and stop of end of the ride are determined, based on the data transmitted by the mobile communication device, and payment for the ride takes place in accordance with actual consumption.
Correct event of the start of the ride *(check-in)* has been transmitted from the mobile communication device, but correct event of the end of the ride *(check-out)* is lacking. Data of the processor unit of the public transport vehicle concerning a stay in the public transport vehicle are lacking. In such a case, the time and stop of start of the ride are determined, based on the data transmitted by the mobile communication device, but as the time and stop of end of the ride are not determined, maximum tariff can be applied when determining payment for the ride.

Data of the mobile communication device concerning the stay in the in the public transport vehicle is missing or insufficient. Correct data have been transmitted from the processor unit of the public transport vehicle about the events of the start of the ride *(check-in)* and the end of the ride *(check-out).* In such a case, the time of start of the ride, the stop of start of the ride, the time of end of the ride and the stop of end of the ride are determined, based on the data transmitted by the processor unit of the public transport vehicle, and payment for the ride takes place in accordance with actual consumption.

## Claims

1. A system for monitoring the use of a public transport vehicle and payment for the ride, where the system (1) comprises a processor unit (3) of the public transport vehicle installed in the public transport vehicle (2);
at least one internal radio transmitter (5) of the public transport vehicle (2), which has data communication connection (4) with the processor unit (3) of the public transport vehicle, whereby the radio transmitter (5) is intended to operate as a radio beacon, which is configured for one-way transmission of a beacon signal (7), which comprises a specific identifier for identification of the public transport vehicle;
a mobile communication device (8) of at least one user of the public transport vehicle (2), which is connected with the processor unit (3) of the public transport vehicle (2) via the second radio communication connection (12) and with the ride administration server (10) via the third radio communication connection (13);
**characterised in that** the system comprises at least one external radio transmitter (6) of the public transport vehicle (2), whereby the radio transmitter (6) is intended to operate as a radio beacon, which is configured for one-way transmission of a beacon signal (7), which comprises a specific identifier for identification of the public transport vehicle;
where the beacon signal (7) of radio transmitters (5, 6) is a Bluetooth low energy (BLE) signal;
where the mentioned mobile communication device (8) is configured to assess the strength of beacon signals (7) transmitted from internal (5) and external (6) radio transmitters and thereby to confirm location of the mobile communication device (8) inside or outside the public transport vehicle (2); and
where the mentioned processor unit (3) is connected with the ride administration server (10) located outside the public transport vehicle (2) via the first radio communication connection (9).

2. A system according to claim 1, **characterised in that** the second radio communication connection (12) is a Bluetooth low-energy signal.

3. A system according to claim 1, **characterised in that** the second radio communication connection (12) is a Classic Bluetooth signal.

4. A system according to claim 1, **characterised in that** the third radio communication connection (13) is a mobile data communication signal.

5. A system according to claim 1, **characterised in that** the third radio communication connection (13) is a WiFi signal.

6. A method for monitoring the use of a public transport vehicle and payment for the ride, where the method comprises:
beacon signals (7) are created around and inside the public transport vehicle by internal (5) and external (6) radio transmitters, which activate the software application installed in the mobile communication device (8);
based on the differences of the beacon signals (7), the location of the mobile communication device (8) in relation to the public transport vehicle (2) is detected with the software application installed in the mobile communication device (8), in order to detect, if the mobile communication device (8) is located inside or outside the public transport vehicle (2); and
data for confirming entry into the public transport vehicle (2) and exit from the public transport vehicle (2) is transmitted with the software application installed in the mobile communication device (8) to the ride administration server (10) via the third radio communication connection (13).

7. A method according to claim 6, **characterised in that** the entry of the mobile communication device (8) into the public transport vehicle (2) is confirmed, when the strength of the signal of the internal radio transmitters (5) measured by the mobile communication device (8) is stronger than the strength of the signal of the external radio transmitters (6).

8. A method according to claim 6 or 7, **characterised in that** the exit of the mobile communication device (8) from the public transport vehicle (2) is confirmed, when the strength of the signal of the external radio transmitters (6) measured by the mobile communication device (8) is stronger than the strength of the signal of the internal radio transmitters (5) or when the mobile communication device (8) can no longer detect the previously-detected signals of radio transmitters (5, 6) of the public transport vehicle (2), from which the exit has occurred.

9. A method according to claims 7 and 8, **characterised in that** during the detection of entry of the mobile communication device (8) into the public transport vehicle (2) and the detection of exit of the mobile communication device (8) from the public transport vehicle (2), the speed of the public transport vehicle (2) and location of the mobile communication device (8) in relation to the public transport vehicle (2) is stored, and the mobile communication device (8) transmits the relevant data of entry and exit together with user account ID stored in the software application to the processor unit (3);

10. A method according to claim 9, **characterised in that** the mentioned data of entry and exit is transmitted from the processor unit (3) of the public transport vehicle (2) to the ride administration server (10) via the first radio connection (9);

11. A method according to any previous claim, **characterised in that** validation of data related to the event of use of the same public transport vehicle (2) received from the processor unit (3) and the mobile communication device (8) is performed, basic data for the calculation of a fee for using the public transport service is selected, and based on that, the sum subject to payment is calculated in the ride administration server (10).
